# EUROPEAN PATENT SPECIFICATION

(11) **EP 3 451 051 B1**
(45) Date of publication and mention of the grant of the patent: **18.08.2021**
(21) Application number: 17465544.9
(22) Date of filing: 28.08.2017
(51) Int. Cl.: G09G 3/34, G02F 1/13357

(54) **DISPLAY DEVICE**
ANZEIGEVORRICHTUNG
AFFICHEUR

(43) Date of publication of application: 06.03.2019
(73) Proprietor: Continental Automotive GmbH, 30165 Hannover (DE)
(72) Inventor: Pasca, Andrei, 300487 Timisoara (RO)
(74) Representative: Continental Corporation

(56) References cited:
- US-A1- 2009 179 910
- US-A1- 2010 283 717
- US-A1- 2010 302 226
- US-A1- 2014 327 710
- US-A1- 2014 354 709
- US-A1- 2017 090 269

## Description

The invention is directed to a display device comprising a display layer, a reflector layer that has controllable reflectivity, a light source, a controller for the display layer and a controller for the reflector layer.

US 8, 786, 643 shows an edge-lit local dimming display comprising an LCD display layer, a light source and a reflector layer. The light source is arranged at sides of a cavity atop of which the LCD display layer is arranged and at the bottom of which the reflector layer is arranged. Controllers for display layer and reflector layer generate control signals to determine the respective brightness level. This known display device still has imperfections in the displayed image, that are recognizable by the user.

US 2009/0179910 A1 discloses a reflection property control layer and display device having a reflector layer placed on a front surface of a display.

US 2017/0090269 A1 discloses an edge-lit two-dimensional display with local dimming having a reflector layer that works in a binary on-off way.

US 2014/0327710 A1 discloses a dual modulation system meant to increase the spatial resolution or temporal resolution of a display system.

US 2014/0354709 A1 discloses a system in which the reflector layer is constructed of individual cells, arranged in an array, each constructed from a controllable surface that has a limited number of controlled segments.

US 2010/0283717 A1 discloses a system with a limited number of controllable areas on the reflector layer.

US 2010/302226 A1 discloses a display device with a display layer, a reflector layer having a controllable reflectivity, a light source, a light distribution arranged between the display layer and the reflector layer, a controller for the reflector layer and a controller for the display panel.

An improved display device is desired.

A display device according to the invention is described in claim 1. According to the invention, the controller for the reflectivity of the reflector layer comprises a two-dimensional filter having a high-pass characteristic that enhances edges between bright and dark areas of the image. This has the advantage of improved edge visibility. Further, a two-dimensional filter requires only a small processing capacity and has low buffer requirements . The high pass characteristic has the advantage that edge enhancement is reached in an easy to implement way. Preferably, the high pass characteristic of the two-dimensional filter is correlated to the light spreading function of the diffusing structures of the light distribution assembly, which is usually assimilated with a two-dimensional low pass filter response. This has the advantage that the appearance of the light distribution assembly as seen from the display side matches more closely the image that is shown on the display. This comes from the fact that the high pass enhancement of the edges at least partially compensates the degradation of the edges induced by the intrinsic low pass characteristic of the light distribution assembly. In turn, this allows for an improved image appearance as seen on the front surface of the display because there is less light leaking from the bright areas towards the darker regions in the immediate vicinity. This means that no halos are created around bright symbols.

Advantageously the reflector layer is a colour type reflector display. This has the advantage that white balance of the display layer can be performed by colour selectively controlling the reflectivity of the reflector layer.

According to the invention the light source and the reflector layer are preferably arranged on opposite sides of the display layer. In this case the display device is a reflective type display. This has the advantage that the light that passes the display layer at a place where a dark or black part is to be displayed, will not or only to a small extent be reflected by the reflective layer, while at a bright area the reflector layer reflects all of the incoming light. Thus a higher contrast between dark areas and bright areas is reached.

According to an advantageous variant of the invention the reflector layer comprises cut outs and the light source has a matrix of light elements wherein the light elements are positioned at the cut-outs. Usually, matrix type backlight sources have white or light coloured areas between their light elements. According to the invention these usually white areas are advantageously no longer simply just white but will reflect light in dependence on the brightness of the content to be displayed. This light is for example light that was generated by the light elements but reflected back by the display layer or any other intermediate layer and would be absorbed or reflected in an uncontrolled way if no controllable reflector layer was available.

Preferably the reflector layer has a structured surface. This means the reflector layer does not have a flat surface but a three-dimensional surface with depressions and ridges. This has the advantage that, if depressions are arranged at the cutouts, also direct reflection from the light elements is reached, thus increasing the maximum contrast ratio that can be reached. The depressions might be rather shallow but may also be rather steep. In the latter case they might be regarded as walls surrounding the light elements.

Further details, advantages and variants of the invention are provided in the following description of exemplary embodiments in the following figures, which show:
- Fig.1: display device
- Fig.2: sectional view of an edge-lit display device
- Fig.3: sectional view of a known reflective display device
- Fig.4: sectional view of a new reflective display device
- Fig.5: backlit display device
- Fig.6: structured surface reflector layer

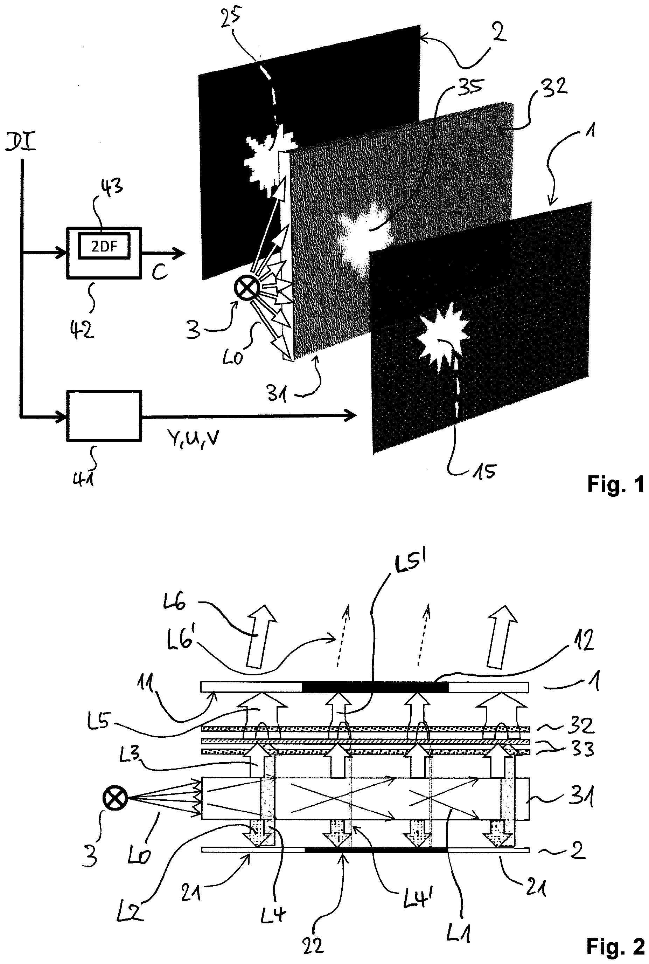

Fig.1 shows a display device according to the invention. It has a display layer 1 and reflector layer 2 that has controllable reflectivity. The light source 3 generates light L0 that enters at the side of a light distribution assembly 31 that is arranged between display layer 1 and reflector layer 2. The light distribution assembly 31 guides the light from the light source 3 to reach all parts of the display layer 1. The light distribution assembly 31 further has a diffusing structure 32 for spreading the light that leaves the light distribution assembly 31. The reflector layer 2 reflects light from the light distribution assembly 31 so that not only light that leaves the light distribution assembly 31 in direction to the display layer 1 but also light that leaves in the opposite direction is reflected and then goes through display layer 1. Image data DI is input to a controller 41 for controlling the display layer 1. The controller 41 generates, based on the image data DI, luminance data Y and/or chrominance data U, V to drive the display layer 1. Of course, other data like R, G, B to drive the display layer 1 can be used here as appropriate. A controller 42 for the reflector layer 2 receives the image data DI and generates a control signal C to control the reflectivity of the reflector layer 2. On the display layer 1, the displayed symbol 15 is shown. A similar symbol 25 on the reflector layer 2 has reduced resolution compared to the symbol 15 displayed on display layer 1. On the light distribution assembly 31 a bright area 35 can be seen, that is caused by the reflection on reflector layer 2 in the area of the symbols 25. Using a reflector layer 2 with controllable reflectivity, as shown here, improves the contrast ratio of the display device. The contrast ratio improvement is produced by sending to the controllable reflector layer 2 a control signal C corresponding to an image that is derived from the input image DI directly, or as an alternative, from the output signal of the controller 41 (not shown here) . In a first step the controller 42 converts the input image data DI to a greyscale image with the number of grey levels adapted according to the bit depth of the reflector layer. This greyscale image is scaled to the resolution of the controllable reflector layer 2, which is usually lower than the resolution of the display layer 1. The greyscale image, either before or after scaling is provided to a two-dimensional filter 43 of the controller 42. The two-dimensional filter 43 comprises a high pass filter characteristic for enhancing the edges between bright and dark areas of the image. Two or more two-dimensional filter 43 having different characteristics may be present, although only a single filter 43 is shown. Because of the edge softening effect of the diffusing structure 32, the high reflectivity areas from the backlight reflector layer 2 may need to be extended past the limits of the original image bright objects, otherwise the shown symbols will exhibit some artefacts around the edges. As one or several two-dimensional filters 43 are used, that require only relatively small kernel sizes, there is no need to store the entire input image data DI in a frame buffer. At most, a buffer that is capable to buffer only several image lines may be necessary. The shown display may also be applied in conjunction with the application of a local dimming backlight technique. This further enhances the achievable contrast ratio.

According to an embodiment of the invention, the reflector layer 2 is a colour type reflector. This has the benefit that it can be used to adjust the white balance of the display layer 1 without affecting the data Y, U, V sent to the display layer 1. This means that the display layer 1 will not lose the colour saturation or dynamic range. The white balance adjustment works by slightly changing the colour of the reflector layer 2. If the colour temperature of the display layer 1 is too low, for example if the light has a red/yellowish tint, the reflector layer 2 is configured to reflect more of the blue light fraction. This moves the colour temperature of the entire display device towards higher values and thus, the white point of the display device is adjusted.

Fig.2 shows a sectional view of an edge-lit display device. On the left side the light source 3 generates light L0 that enters the light distribution assembly 31. Below the light distribution assembly 31 the reflector layer 2 is located. Above the light distribution assembly 31 a diffusing structure 32 and two brightness enhancing films 33 are located. Above these, the display layer 1 is located. In this diagrammatic view, the different layers are shown separately for ease of understanding, while in reality these layers are stacked upon each other or are arranged close to each other. Light L0 generated by the light source 3 enters the light distribution assembly 31 at one side.

By means of total internal reflection, light L1 propagates within the light distribution assembly 31. Another part of the light L0 leaves the light distribution assembly 31 as light L2 in direction to the reflector layer 2. Another part leaves the light distribution assembly 31 as light L3 in the direction of the brightness enhancing films 33. Light L4 reflected by the reflector layer 2 passes through the light distribution assembly 31 in direction to the brightness enhancing films 33. Both, light L3 and L4 leave through the diffusing structure 32 as combined light L5. Light L5 reaches the display layer 1 and leaves a transmitting area 11 as light L6. As indicated by the size of the arrow, some of the light L5 that enters the display layer 1 is lost, mainly due to the polarisation characteristic of a liquid crystal display that preferably is used for display layer 1. It can be seen that, on the very left side and on the very right side of the figure the reflector layer 2 has a reflecting area 21. This means, all of the light L2 impinging on the reflector layer 2 in the reflecting area 21 is reflected as light L4 and adds to the light L3 to form light L5. In the middle part of the figure a low reflecting area 22 is shown. It can be seen, that only a small amount of light L4' is reflected. It adds to a smaller amount of light L5' that enters on the display layer 1. It arrives at a blocking area 12 of the display layer 1 where nearly all of it is blocked. Only a very small amount of light L6' passes through the display layer 1 at the blocking area 12. Thus the contrast ratio between light L6 and light L6' is rather high. If the reflector layer 2 was not controllable and had the same reflectivity all over its surface, the same amount of light L5 would arrive at all areas of the display layer 1 and thus a larger amount of light would leave at the blocking area 12, thus having a reduced contrast ratio. As described above, the reflector layer 2 is controlled using the controller 42 having a two-dimensional filter 43.

As mentioned, if the reflectance of the reflector layer 2 was uniform, the amount of light that exited the display layer 1, which is the useful light that actually forms the perceived image, was strictly modulated by the display layer 1 only, and was thus limited by the contrast ratio of the display layer 1. On the other hand, as the reflector layer 2 is configured in such a way as to reflect light only towards the bright parts of the display layer 1 and to have reduced reflectivity for the blocking areas 12 of the display layer 1, as shown in the figure, the total light output of the system has a higher dynamic range. That means, the ratio between the brightness of the transmitting areas 11 relative to that of the dark areas 12 is increased, compared to the original display having a reflector layer of constant reflectivity. This comes from the fact that the new light distribution assembly 31 provides less light for the blocking areas 12 than the typical state-of-the-art light distribution assembly.

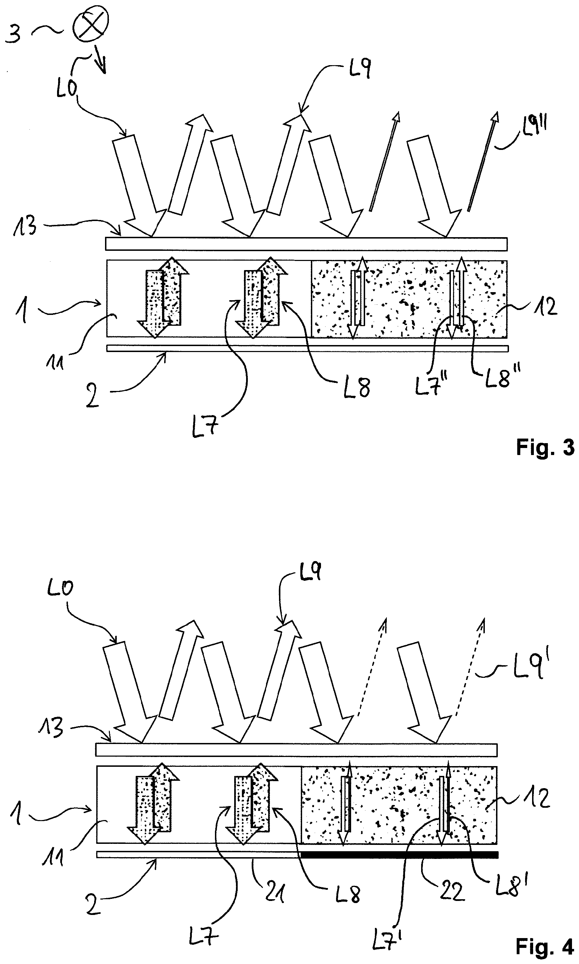

Fig.3 shows a sectional view of a known reflective display device. Above a reflector layer 2 there is the display layer 1. Above the display layer 1 there is the front transparent layer, for simplicity referred to as glass 13 in the following. A light source 3 is diagrammatically shown on the top left side. It is arranged on the opposite side of the display layer 1 than the reflector layer 2. The light source 3 generates light L0 that enters the front glass 13 and passes the display layer 1 as light L7. It is reflected by the reflector layer 2 and passes the display layer 1 again as Light L8. It then leaves the front glass 13 as light L9. On the left side, a transmitting area 11 of the display layer is shown. On the right side, a blocking area 12 is shown. As can be seen, the amount of light L7" and L8" passing through the blocking area 12 is lower than the light passing at the transmitting area 11. Thus also the amount of light L9" leaving at the blocking area 12 is reduced. In this figure, the reflector layer 2 has a constant reflectivity.

Fig.4 shows a sectional view of a reflective display device according to the invention, having a reflector layer 2 of controllable reflectivity. This figure is similar to the previous one and differs mainly in the right part. In the right part, the reflector layer 2 has a low reflecting area 22 while it has a reflecting area 21 on the left side. The amount of light L8' reflected at the low reflecting area 22 is smaller than the amount of light L7' arriving at the low reflecting area 22. Thus also the light L9' leaving the front glass 13 in the area of the blocking area 12 and the low reflecting area 22 is smaller than the amount of light L9" shown in the previous figure. This means, by controlling the reflector layer 2 in correlation with the image content displayed by the display layer 1, it is possible to effectively increase the contrast ratio of the display by reducing the brightness of the dark areas. The resulting enhanced contrast ratio for the reflective type display is mainly given by the product between the contrast ratio of the display layer 1 and the contrast ratio of the reflector layer 2. If, for instance, the display layer has a contrast ratio of 20 : 1, which is a typical value for electro-wetting displays, and the contrast ratio of the reflector layer 2 is around 10 : 1, which is a typical value for e-ink displays, the resulting assembly has an effective contrast ratio of 200 : 1. For transmissive type displays as shown in Fig.1 and Fig.2, the equivalent contrast ratio depends on several other factors besides the initial display's contrast ratios. As only a fraction of the light that reaches the backside of the display results from the reflections on the reflector layer 2, with the other part of the light coming directly from the light source to the light distribution assembly 31, the rate of the active reflector contrast ratio is reduced. In fact, as long as the contrast ratio of the reflector layer 2 is larger than around 10 x 1, the main driving factor of the equivalent contrast ratio is the fraction of total useful light that is a direct result of the presence of the active reflector layer 2. That is, assuming that only a fraction F of the useful total T light output of the light distribution assembly is a direct result of the presence of the backlight reflector layer 2, the equivalent contrast is given by CRD x T / (T - F + F/CRR) . CRD is the contrast ratio of the display layer 1 and CRR is the contrast ratio of the reflector layer 2. Assuming the fraction F being around 75%, which is made possible by the presence of a double brightness enhancing film 33, of total light output T, the resulting contrast ratio is around 3.1 times (for CRR = 10 : 1) to around 4 times (for CRR > 100 : 1) larger than the initial display contrast ratio.

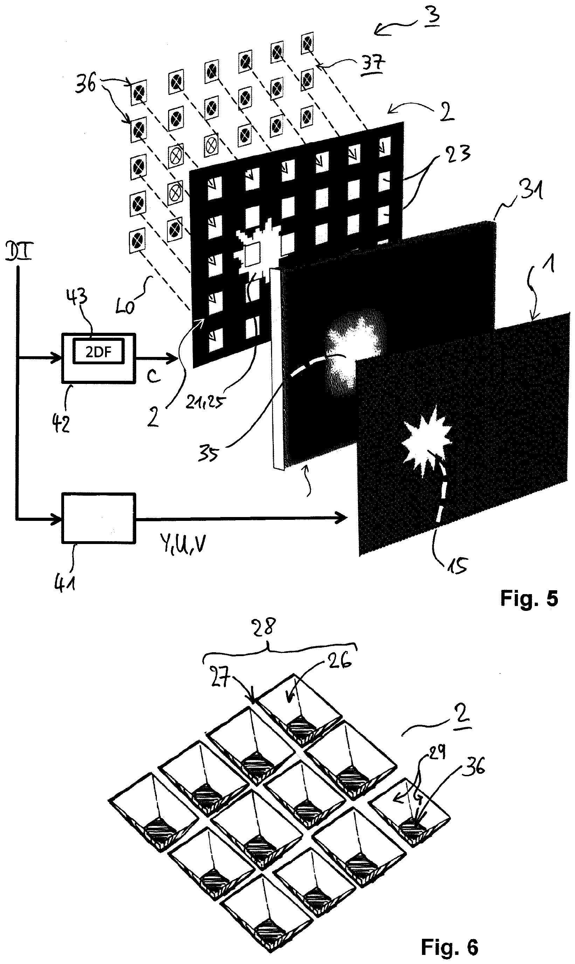

Fig.5 shows a backlit display device which is a transmissive display using a combination of a matrix type local dimming and a controllable backlight reflector according to the invention. The display layer 1 as well as the controllers 41 and 42 are similar to those shown in Fig.1. The controlled backlight reflector layer 2 has cut-outs 23 at which light elements 36 are positioned. The light elements 36 are arranged as a matrix 37. The matrix 37 of light elements 36 forms the light source 3. The light distribution assembly 31 receives light directly from the light elements 36. The big part of the light entering the light distribution assembly 31 from the light elements 36 passes the light distribution assembly 31 and leaves it for the display layer 1. However, another part is reflected from the light distribution assembly 31 back to the reflector layer 2. Further, a part of the light arriving at display layer 1 is reflected back to the light distribution assembly 31, passes the light distribution assembly 31 and arrives at the reflector layer 2. The reflector layer 2 has a reflecting area 21 in the range of the symbols 25 to be displayed. Light coming from the light distribution assembly 31 onto the reflector layer 2 is reflected by the reflecting area 21 and thus causes the bright area 35 on the light distribution assembly 31. It is to be noted, that the light elements 36 are driven thus that they are turned off in areas where no displayed symbol 15 exists and only those light elements 36 that are located in the range of the symbol 15 are turned on. Thus the light distribution assembly 31 is dark, except at the bright area 35.

Fig.6 shows a structured surface reflector layer 2. As can be seen, there are depressions 26 and ridges 27 that form the structured surface 28 of the reflector layer 2. At the bottom of the depressions 26 the light elements 36 are positioned. The sidewalls 29 of the depressions have controllable reflectivity. Light generated by the light elements 36 may also impinge directly on the sidewalls 29 and is reflected by these, depending on their controlled reflectance, in addition to the light that reaches the reflector layer 2 from the light distribution assembly 31. The described embodiments may be altered and amended by a skilled person without departing from the scope of the claims. Although not described, also derivatives of the described embodiments, like transflective displays, lie within the scope of the claims.

## Claims

1. Display device adapted to receive image data (DI), comprising a display layer (1), a controllable reflector layer (2) that has controllable reflectivity, a light source (3) generating light (L0) that enters a light distribution assembly (31), wherein the light distribution assembly (31) is arranged between the display layer (1) and the reflector layer (2), wherein the display device further comprises
- a first controller (41) adapted to generate, based on the image data (DI), display data to drive the display layer (1) , and
- a second controller (42) adapted to convert the input image data (DI) to a greyscale image with the number of grey levels adapted according to the bit depth of the controllable reflector layer (2), wherein the second controller (42) comprises a two-dimensional filter (43) adapted to receive said greyscale image, and is adapted to generate, based on the output of the two-dimensional filter (43), a control signal (C) to control the reflectivity of the controllable reflector layer (2), **characterized in that** the two-dimensional filter (43) is a high-pass filter that enhances edges between bright and dark areas of the image data (DI) , to at least partially compensate the degradation of the edges induced by the intrinsic low pass characteristic of the light distribution assembly (31).

2. Display device according to claim 1, wherein the reflector layer (2) is a colour type reflector display.

3. Display device according to claim 2, wherein the colour of the reflector layer (2) is changeable to adjust the colour temperature of the display device.

4. Display device according to one of the preceding claims 1 to 3, wherein the light source (3) and the reflector layer (2) are arranged on opposite sides of the display layer (1).

5. Display device according to one of the preceding claims 1 to 2, wherein the reflector layer (2) comprises cut-outs (23) and the light source (3) has a matrix (37) of light elements (36) and wherein the light elements (36) are positioned at the cut-outs (23).

6. Display device according to claim 5, wherein the reflector layer (2) has a structured surface (28).

## Patentansprüche

1. Anzeigevorrichtung, ausgelegt zum Empfangen von Bilddaten (DI), umfassend eine Anzeigeschicht (1), eine steuerbare Reflektorschicht (2), die einen steuerbaren Reflexionsgrad aufweist, eine Lichtquelle (3), die Licht (L0) erzeugt, das in eine Lichtverteilungsbaugruppe (31) eintritt, wobei die Lichtverteilungsbaugruppe (31) zwischen der Anzeigeschicht (1) und der Reflektorschicht (2) angeordnet ist, wobei die Anzeigevorrichtung weiter umfasst
- einen ersten Controller (41), der ausgelegt ist zum Erzeugen, auf Basis der Bilddaten (DI), von Anzeigedaten zum Ansteuern der Anzeigeschicht (1), und
- einen zweiten Controller (42), der ausgelegt ist zum Umwandeln der eingegebenen Bilddaten (DI) in ein Grauskalenbild, wobei die Anzahl von Graustufen gemäß der Bittiefe der steuerbaren Reflektorschicht (2) ausgelegt ist, wobei der zweite Controller (42) einen zweidimensionalen Filter (43) umfasst, der ausgelegt ist zum Empfangen des Grauskalenbilds, und ausgelegt ist zum Erzeugen auf Basis der Ausgabe des zweidimensionalen Filters (43), eines Steuersignals (C) zum Steuern des Reflexionsvermögens der steuerbaren Reflektorschicht (2), **dadurch gekennzeichnet, dass** der zweidimensionale Filter (43) ein Hochpassfilter ist, der Kanten zwischen hellen und dunklen Bereichen der Bilddaten (DI) verstärkt, um mindestens teilweise die Verschlechterung der Kanten, durch die intrinsische Tiefpasscharakteristik der Lichtverteilungsbaugruppe (31) induziert, zu kompensieren.

2. Anzeigevorrichtung nach Anspruch 1, wobei die Reflektorschicht (2) eine Reflektoranzeige vom Farbtyp ist.

3. Anzeigevorrichtung nach Anspruch 2, wobei die Farbe der Reflektorschicht (2) veränderlich ist, um die Farbtemperatur der Anzeigevorrichtung einzustellen.

4. Anzeigevorrichtung nach einem der vorhergehenden Ansprüche 1 bis 3, wobei die Lichtquelle (3) und die Reflektorschicht (2) auf gegenüberliegenden Seiten der Anzeigeschicht (1) angeordnet sind.

5. Anzeigevorrichtung nach einem der vorhergehenden Ansprüche 1 bis 2, wobei die Reflektorschicht (2) Ausnehmungen (23) umfasst und die Lichtquelle (3) eine Matrix (37) von Lichtelementen (36) aufweist und wobei die Lichtelemente (36) an den Ausnehmungen (23) positioniert sind.

6. Anzeigevorrichtung nach Anspruch 5, wobei die Reflektorschicht (2) eine strukturierte Oberfläche (28) aufweist.

## Revendications

1. Dispositif d'affichage adapté pour recevoir des données d'image (DI), comprenant une couche d'affichage (1), une couche de réflecteur commandable (2) qui a une réflectivité commandable, une source de lumière (3) générant de la lumière (L0) qui pénètre dans un ensemble de distribution de lumière (31), l'ensemble de distribution de lumière (31) étant disposé entre la couche d'affichage (1) et la couche de réflecteur (2), le dispositif d'affichage comprenant en outre
- un premier dispositif de commande (41) adapté pour générer, sur la base des données d'image (DI), des données d'affichage pour exciter la couche d'affichage (1), et
- un deuxième dispositif de commande (42) adapté pour convertir les données d'image d'entrée (DI) en une image en échelle de gris avec le nombre de niveaux de gris adapté en fonction de la profondeur de bit de la couche de réflecteur commandable (2), le deuxième dispositif de commande (42) comprenant un filtre bidimensionnel (43) adapté pour recevoir ladite image en échelle de gris, et étant adapté pour générer, sur la base de la sortie du filtre bidimensionnel (43), un signal de commande (C) pour commander la réflectivité de la couche de réflecteur commandable (2), **caractérisé en ce que** le filtre bidimensionnel (43) est un filtre passe-haut qui fait ressortir des bords entre zones claire et sombre des données d'image (DI), pour compenser au moins partiellement la dégradation des bords induite par la caractéristique passe-bas intrinsèque de l'ensemble de distribution de lumière (31) .

2. Dispositif d'affichage selon la revendication 1, dans lequel la couche de réflecteur (2) est un afficheur à réflecteur de type coloré.

3. Dispositif d'affichage selon la revendication 2, dans lequel la couleur de la couche de réflecteur (2) est modifiable pour régler la température de couleur du dispositif d'affichage.

4. Dispositif d'affichage selon une des revendications 1 à 3 précédentes, dans lequel la source de lumière (3) et la couche de réflecteur (2) sont disposées sur des côtés opposés de la couche d'affichage (1).

5. Dispositif d'affichage selon une des revendications 1 à 2 précédentes, dans lequel la couche de réflecteur (2) comprend des découpes (23) et la source de lumière (3) a une matrice (37) d'éléments lumineux (36), et dans lequel les éléments lumineux (36) sont positionnés au niveau des découpes (23).

6. Dispositif d'affichage selon la revendication 5, dans lequel la couche de réflecteur (2) a une surface structurée (28).
